# EUROPÄISCHE PATENTSCHRIFT

(11) **EP 2 549 161 B1**
(45) Veröffentlichungstag und Bekanntmachung des Hinweises auf die Patenterteilung: **01.03.2017**
(21) Anmeldenummer: 12176698.4
(22) Anmeldetag: 17.07.2012
(51) Int. Cl.: F16K 31/02, F16K 31/40

(54) **Eigenmediumbetätigtes Ventil**
Controlled fluid valve
Soupape actionnée par son propre fluide

(30) Priorität: 20.07.2011 EP 11174694
(43) Veröffentlichungstag der Anmeldung: 23.01.2013
(73) Patentinhaber: Parker-Hannifin Corp, Cleveland, OH 44124 (US)
(72) Erfinder: Schapeler, Dirk, Mountain View, CA 94040-0000 (US); Feller, Torsten, 42369 Wuppertal (DE); Clauberg, Karin, 42657 Solingen (DE); Jahr, Andreas, 41462 Neuss (DE)
(74) Vertreter: Cohausz & Florack

(56) Entgegenhaltungen:
- DE-A1- 3 642 669
- DE-B3-102006 005 517
- US-A1- 2008 185 541
- US-B1- 7 703 740
- US-B2- 7 320 457

## Beschreibung

Die Erfindung betrifft ein eigenmediumbetätigtes Ventil für ein Fluid umfassend ein Ventilgehäuse mit einem Ventilzufluss und einem Ventilabfluss, einen im Strömungsrichtung des Fluids zwischen Ventilzufluss und Ventilabfluss angeordneten Ventilsitz, ein in dem Ventilgehäuse beweglich angeordnetes Schließmittel mit einer ersten Seite und einer zweiten Seite, wobei das Schließmittel im Schließzustand des Ventils den Ventilsitz dicht verschließt, eine Entlastungsöffnung zur Herstellung eines Druckausgleichs zwischen der ersten Seite und der zweiten Seite des Schließmittels und wenigstens einen Steueraktuator, wobei der Steueraktuator in einer Schließstellung die Entlastungsöffnung des Schließmittel verschließt und in einer Öffnungsstellung die Entlastungsöffnung des Schließmittel freigibt, derart, dass das Schließmittel infolge eines Druckausgleichs über die Entlastungsöffnung den Ventilsitz freigibt.

Eigenmediumbetätigte Ventile sind aus dem Stand der Technik seit langem bekannt. Ein typisches Ventil der oben bezeichneten Art ist in der US-B-7 703 740 oder auch in der DE-OS 36 42 669 A1 beschrieben. Das in der letztgenannten Druckschrift beschriebene Ventil umfasst einen elektromagnetischen Steueraktuator, dessen von einer Spule umgebener Magnetanker im Ruhezustand die Entlastungsbohrung verschließt und bei Betätigung des Steueraktuators freigibt.

Als problematisch erweist sich bei Ventilen der vorstehenden Art regelmäßig das Hystereseverhalten des elektromagnetischen Steueraktuators, was im Betrieb zu einer Änderung der Positioniergenauigkeit des Steueraktuators und somit zu einem nicht mehr vollständig beherrschbaren Öffnungs- und Schließverhalten des Ventils führt. Ferner ist es ein Nachteil dieser Ventile, dass der eingesetzte elektromagnetische Steueraktuator das Gewicht und den Platzbedarf der Ventilkonstruktion deutlich erhöht.

Der vorliegenden Erfindung liegt daher die Aufgabe zugrunde, ein verbessertes eigenmediumsbetätigtes Ventil der eingangs genannten Art anzugeben, welches sich durch ein sehr präzises Öffnungs- und Schließverhalten auch über lange Betriebszeiträume ebenso wie durch eine einfache Konstruktion und eine kompakte Bauform auszeichnet.

Die Aufgabe wird erfindungsgemäß mit einem eigenmediumbetätigten Ventil gemäß dem Oberbegriff des Patentanspruches 1 dadurch gelöst, dass der wenigstens eine Steueraktuator als wenigstens ein elektroaktiver Polymeraktuator ausgebildet ist, wobei die Entlastungsöffnung durch ein mittels des wenigstens einen elektroaktiven Polymeraktuators betätigbares Sperrelement verschließbar ist und wobei das Sperrelement durch ein Gleitlager mit einem Gleitlagerbolzen und einer Gleitlagerhülse gebildet ist, wobei der Gleitlagerbolzen mittels des wenigstens einen elektroaktiven Polymeraktuators in die Gleitlagerhülse einschiebbar ist und wobei der Gleitlagerbolzen und die Gleitlagerhülse in ihrer Mantelfläche jeweils eine Durchgangsöffnung aufweisen, derart, dass bei einem Einschieben des Gleitlagerbolzens in die Gleitlagerhülse die Durchgangsöffnungen zueinander und zur Entlastungsöffnung fluchtend ausgerichtet sind und diese freigeben.

Der Einsatz elektroaktiver Polymere zur Steuerung des Durchflusses durch ein Ventil ist beispielsweise aus US-B- 7 320 457 bekannt. Auch in der US-A-2008/185541 ist der Einsatz elektroaktiver Polymere als aktives Material in einem Aktuator zur Steuerung des Durchflusses durch ein Ventil beschrieben. Die DE-B- 10 2006 05517 beschreibt überdies ein Mikroventil zur Steuerung des Durchflusses beispielsweise von flüssigen Arzneimitteln, bei dem eine Durchflussöffnung durch eine ein elektroaktives Polymer enthaltende Membran verschlossen ist.

Elektroaktive Polymeraktuatoren umfassen bevorzugt eine oder mehrere beidseitig mit Elektroden versehenen Schichten elektroaktiver Polymere. Beim Anlegen eines elektrischen Signals, beispielsweise einer elektrischen Spannung, an die Elektroden bildet sich zwischen diesen ein elektrisches Feld aus, wobei sich die entgegengesetzt aufgeladenen Elektroden anziehen. Dies führt dazu, dass ein Druck auf die elektroaktive Polymerschicht ausgeübt wird. Hierdurch wird die Dicke der Polymerschicht (Z-Richtung) reduziert, wobei sich die Schicht in der Fläche (X- und Y-Richtung) aufgrund der Volumenkonstanz des Elastomermaterials ausdehnt. Hierzu werden dehnfähige Elektrodenmaterialien vollflächig oder auch strukturiert auf die Oberflächen der Elastomerschicht aufgebracht. Beispielsweise können entsprechend nachgiebige Elektrodenmaterialien eingesetzt werden, also Materialien, welche eine geringe Steifigkeit aufweisen. Beispielhafte nachgiebige Materialien sind mit elektrisch leitfähigen Füllstoffen gefüllte Elastomere oder Fluorethylenpropylene.

Der besondere Vorteil des Einsatzes eines elektroaktiven Polymeraktuators besteht darin, dass dieser als elektrostatischer Wandler auch über lange Zeiträume keinerlei Hystereseverhalten aufweist, sondern mit extrem kurzer Ansprechzeit und hoher Positioniergenauigkeit ein elektrisches Signal in eine Stellbewegung umsetzt. Ferner lassen sich elektroaktive Polymeraktuatoren aufgrund ihres sehr geringen Platzbedarfs ohne weiteres in bestehende Ventilkonstruktionen einbauen, wobei der bei konventionellen Ventilen für den elektromagnetischen Steueraktuator vorzusehene Bauraum und das damit verbundene Gewicht im Wesentlichen eingespart werden kann. Obwohl der Einsatz elektroaktiver Polymeraktoren, zu denen die dielektrischen Elastomeraktuatoren gehören, aus dem Stand der Technik bereits prinzipiell bekannt ist (vgl. etwa WO 03/107523 A1, US 7,320,457 oder US 7,703,742), ist die vorteilhafte Verwendung elektroaktiver Polymeraktuatoren in eigenmediumbetätigten Ventilen der eingangs beschriebenen Art bisher nicht bekannt.

Erfindungsgemäß ist die Entlastungsöffnung durch ein mittels des wenigstens einen elektroaktiven Polymeraktuators betätigbares Sperrelement verschließbar. Ein solches Sperrelement kann einfach konstruiert, beispielsweise als Kunststoffspritzteil ausgebildet sein. Auch erlaubt es eine spezifische Anpassung auf Größe und Form der Entlastungsöffnung.

Ferner ist erfindungsgemäß das Sperrelement durch ein Gleitlager mit einer Gleitlagerbolzen und Gleitlagerhülse gebildet, wobei der Gleitlagerbolzen mittels des wenigstens einen elektroaktiven Polymeraktuators in die Gleitlagerhülse einschiebbar ist und wobei Gleitlagerbolzen und Gleitlagerhülse in ihrer Mantelfläche jeweils eine Öffnung aufweisen, so dass bei einem Einschieben des Gleitlagerbolzens in die Gleitlagerhülse die Durchgangsöffnungen zueinander und zur Entlastungsöffnung fluchtend ausgerichtet sind und diese freigeben. Durch eine solche Gleitlageranordnung ist ein störungs- und wartungsfreier Betrieb des erfindungsgemäßen Ventils über einen langen Zeitraum sichergestellt.

Hinsichtlich der Ventilkonstruktion ist nach einer vorteilhaften Ausgestaltung der Erfindung vorgesehen, dass in dem Ventilgehäuse auf der ersten Seite des Schließmittels ein Druckraum vorgesehen ist und auf der zweiten Seite des Schließmittels ein Steuerraum vorgesehen ist, wobei der Druckraum mit dem Ventilzufluss verbunden ist und über den Ventilsitz mit dem Ventilabfluss verbunden ist, wobei der Steuerraum über eine Steueröffnung mit dem Ventilzufluss verbunden ist und über die Entlastungsöffnung mit dem Ventilauslass verbunden ist und wobei der Strömungsquerschnitt der Steueröffnung geringer ist als der Strömungsquerschnitt der Entlastungsöffnung. Durch diese Konstruktion wird ein besonders zuverlässiger Betrieb des Ventils sichergestellt.

Nach einer vorteilhaften Ausgestaltung der Erfindung ist der wenigstens eine elektroaktive Polymeraktuator als Stapelaktuator mit einer Mehrzahl übereinander gestapelter elektroaktiver Polymerschichten ausgebildet. Hierdurch erhöht sich die resultierende Aktuatorkraft bei der Stellbewegung entsprechend.

Die Stellbewegung des elektroaktiven Polymeraktuators kann im Wesentlichen senkrecht zur Erstreckung der Polymerschichten erfolgen. Die Stellbewegung kann jedoch auch entlang der flächenmäßigen Ausdehnung der elektroaktiven Polymerschicht erfolgen. In diesem Falle handelt es sich um einen "planaren" Aktuator, bei dem entsprechend die Stellbewegung im Wesentlichen in der Erstreckungsebene der elektroaktiven Polymerschicht stattfindet. Auch bei einem solchen planaren Aktuator kann wiederum ein Stapelaktuator mit einer Mehrzahl übereinander gestapelter elektroaktiver Polymerschichten eingesetzt werden. Der besondere Vorteil besteht hierbei inwiederum in der Erhöhung der Aktuatorkraft.

In einer Ausführungsform des erfindungsgemäßen eigenmediumbetätigten Ventils umfasst der wenigstens eine elektroaktive Polymeraktuator wenigstens eine elektrodierte dielektrische Elastomerschicht, wobei die wenigstens eine elektrodierte dielektrische Elastomerschicht bevorzugt ein Polyurethan-Elastomer, Silikon-Elastomer und/oder Acrylat-Elastomer enthält. Besonders bevorzugt sind hierbei Polyurethan-Elastomere. Diese können durch Umsetzung eines Polyisocyanats A) und/oder eines Polyisocyanat-Prepolymers B) mit mindestens einer difunktionellen, gegenüber Isocyanatgruppen reaktiven Verbindung C) in Anwesenheit eines in der Polyurethanchemie üblichen Katalysators D) hergestellt werden. Einzelheiten zur Zusammensetzung der Polyurethanelastomere sind der europäischen Patentanmeldung EP-A-2 330 650 zu entnehmen.

Es wurde gefunden, dass solche Polyurethanpolymere gute elastomere Eigenschaften aufweisen und sich als dielektrische Elastomere in elektromechanischen Aktorsystemen eignen können. Insbesondere ist eine hohe maximale Dehnung vorteilhaft.

Vorzugsweise ist das Polyurethanelastomer ein dielektrisches Elastomer mit einem spezifischen elektrischen Volumenwiderstand gemäß ASTM D 257 von ≥ 10¹² bis ≤ 10¹⁷ Ohm cm. Es ist weiterhin möglich, dass das Polyurethanpolymer eine dielektrische Durchbruchsfeldstärke gemäß ASTM 149-97a von ≥ 50 V/µm bis ≤ 200 V/µm aufweist.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Nach einer weiteren Ausgestaltung der Erfindung können die dehnfähigen Elektrodenmaterialien vollflächig oder auch strukturiert auf die Oberflächen der Elastomerschicht aufgebracht werden. Hierdurch ist es möglich, die elektroaktive Polymerschicht lokal, das heißt ortsaufgelöst, zu aktivieren, um die gewünschte Stellbewegung zu bewirken.

Nach einer weiteren Ausgestaltung der Erfindung sind die Entlastungsöffnung und der wenigstens eine elektroaktive Polymeraktuator in das Schließmittel integriert. Hierdurch wird eine besonders kompakte Bauform ermöglicht, wobei das Schließmittel aufgrund des sehr geringen Platzbedarfs des elektroaktiven Polymeraktuators gegenüber konventionellen Konstruktionen nur geringfügig modifiziert werden muss.

Gemäß einer weiteren Ausgestaltung der Erfindung ist die Steueröffnung als Ausnehmung im Ventilgehäuse ausgebildet. Alternativ oder auch ergänzend - im diesem Falle gäbe es mehr als eine Steueröffnung - kann sie auch im Schließmittel vorgesehen sein.

Im Folgenden wird die Erfindung anhand einer ein Ausführungsbeispiel darstellenden Zeichnung näher erläutert. Es zeigen:
- Fig. 1: ein eigenmediumbetätigtes Ventil mit einem elektroaktiven Polymeraktuator als Steueraktuator in einer ersten Ausgestaltung im Längsschnitt,
- Fig. 2a-c: das Schließmittel des Ventils aus Fig. 1 mit geschlossener und geöffneter Entlastungsöffnung in einer Schnittansicht und in Drausfsicht,
- Fig. 3a,b: ein gegenüber den Fig. 1 und 2 modifiziertes Schließmittel mit geschlossener und geöffneter Entlastungsöffnung in einer Schnittansicht,
- Fig. 4: das Sperrelement des Schließmittels aus Fig. 3 in perspektivischer Ansicht,
- Fig. 5a-c: ein Schließmittel in einer dritten Ausgestaltung mit geschlossener und geöffneter Entlastungsöffnung in einer Schnittansicht sowie in Draufsicht.

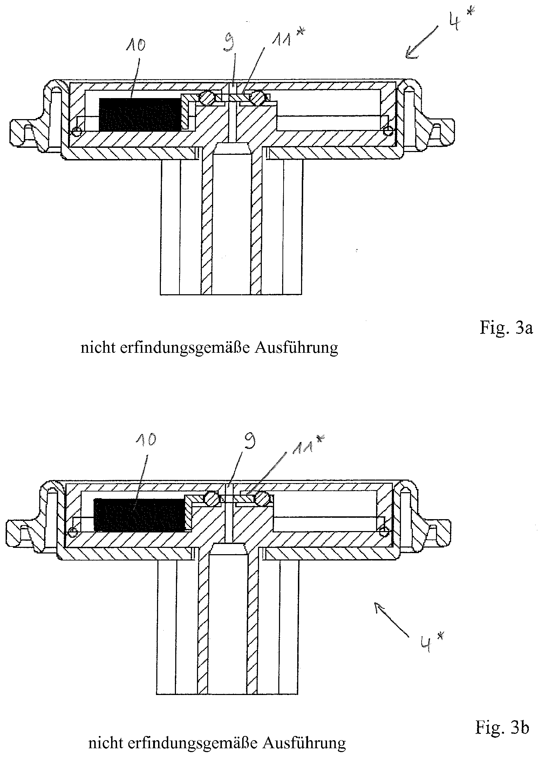

Die in den Figuren 3 bis 5 gezeigten Schließmittel stellen keine erfindungsgemäßen Ausführungsformen dar.

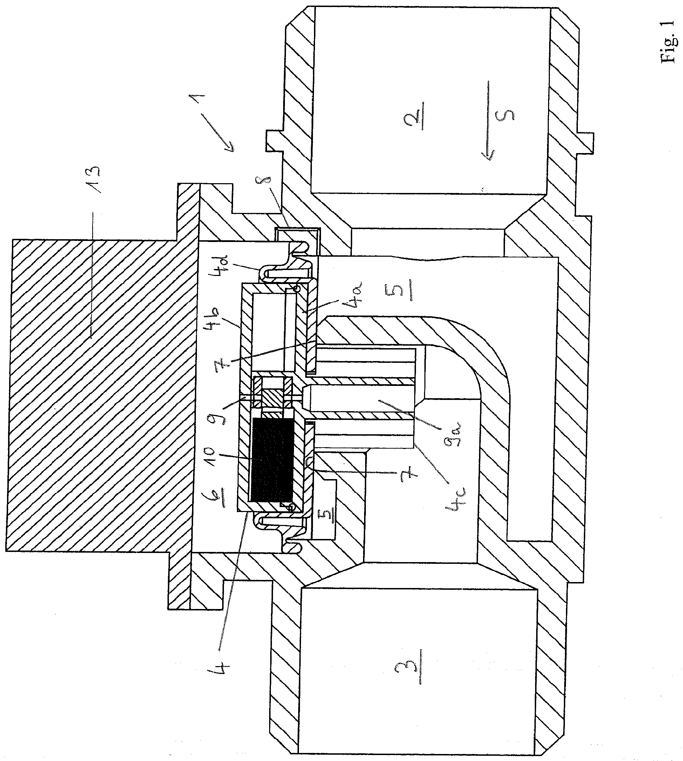

Figur 1 zeigt ein eigenmediumbetätigtes Ventil für ein Fluid, beispielsweise für Wasser, mit einem elektroaktiven Polymeraktuator 10 als Steueraktuator in einer ersten Ausgestaltung im Längsschnitt.

Im Einzelnen umfasst das Ventil ein Gehäuse 1 mit einem Ventilzufluss 2 und einem Ventilabfluss 3, an welche jeweils in üblicher Weise geeignete Leitungen angeschlossen werden können (nicht dargestellt). Das Ventil umfasst ferner einen in Strömungsrichtung S des Fluids zwischen Ventilzufluss 2 und Ventilabfluss 3 angeordneten ringförmigen Ventilsitz 7. Dieser wird durch ein im Ventilgehäuse 1 beweglich angeordnetes Schließmittel 4 im geschlossenen Zustand des Ventils abgedichtet. Im Einzelnen umfasst das Schließmittel 4 einen scheibenförmigen Abschnitt mit einer ersten Seite 4a und einer zweiten Seite 4b sowie einen von der ersten Seite 4a senkrecht und zentral abstehenden düsenförmigen Abschnitt 4c. Der düsenförmige Abschnitt 4c greift durch die von dem ringförmigen Ventilsitz 7 umgebene Öffnung hindurch und weist eine zentrale Öffnung 9a auf, welche in eine verschließbare Entlastungsöffnung 9 zur Herstellung eines Druckausgleichs zwischen der ersten Seite 4a und der zweiten Seite 4b des Schließmittels 4 übergeht. Der dichte Sitz des Schließmittel 4 auf dem Ventilsitz 7 im Schließzustand des Ventils wird ferner durch eine auf der ersten Seite 4a des Schließmittel 4 aufliegende Rollmembrandichtung 4d sichergestellt, wie an sich bekannt.

Innerhalb des scheibenförmigen Schließmittels 4 ist ein elektroaktive Polymeraktuator 10 angeordnet. Vorliegend ist er als Stapelaktuator mit einer Vielzahl übereinander gestapelter jeweils zweiseitig elektrodierter elektroaktiver Polymerschichten (nicht im einzelnen dargestellt) ausgebildet, wobei jede Polymerschicht durch eine dielektrische Elastomerschicht, die ihrerseits insbesondere ein Polyurethan-Elastomer enthält, gebildet wird.. Gemäß dem Funktionsprinzip elektroaktiver Polymerschichten werden die Elektroden an eine Spannungsquelle angeschlossen, so dass sich die gegenüberliegenden und mit der jeweiligen elektroaktiven Polymerschicht kontaktierten Elektrodenschichten unterschiedlich aufladen und in der Folge gegenseitig elektrostatisch anziehen. Aufgrund der Elastizität der elektroaktiven Polymerschichten bewirkt die elektrostatische Anziehungskraft eine Reduktion der Dicke der elektroaktiven Polymerschicht und infolge der Volumenkonstanz ein laterales Ausweichen des derart komprimierten Materials, was vorliegend als planare Stellbewegung in dem elektroaktiven Polymeraktuator genutzt wird. In Bezug auf die gestapelte Anordnung der elektroaktiven Polymerschichten ist es einerseits möglich, benachbarte Polymerschichten mit einer "gemeinsamen" Elektrode zu versehen, die entsprechend beide benachbarten elektroaktiven Polymerschichten kontaktiert. Bei diesem mit vergleichsweise geringem Aufwand zu realisierenden Aufbau versteht es sich, dass die zwischen den einzelnen Polymerschichten angeordneten gemeinsamen Elektroden entlang der Dickenausdehnung des Schichtstapels abwechselnd unterschiedlich kontaktiert sind, so dass sich bei aktiviertem Aktuatorstapel über die Dicke des Stapels entsprechend beispielsweise eine +-+-+-+-...usw.-Polung ergibt. Ebenso ist es möglich, benachbarte Polymerschichten jeweils mit eigenen Elektroden zu versehen, so dass die benachbarten Polymerschichten entsprechend keine gemeinsame Elektrode aufweisen. Hierdurch ergibt sich bei entsprechender Isolierung unmittelbar benachbarter Elektroden demnach eine größere Freiheit in der Kontaktierung der einzelnen Elektroden.

Um die laterale Dehnung des elektroaktiven Polymers nun nicht zu behindern, muss das verwendete Elektrodenmaterial eine geringe Steifigkeit aufweisen. Beispielhafte nachgiebige Materialien sind mit elektrisch leitfähigen Füllstoffen gefüllte Elastomere oder Fluorethylenpropylene.

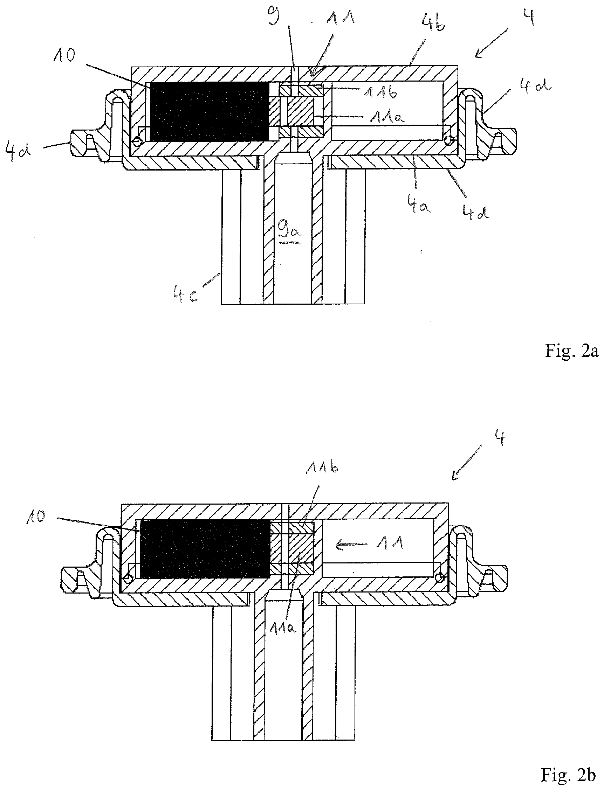

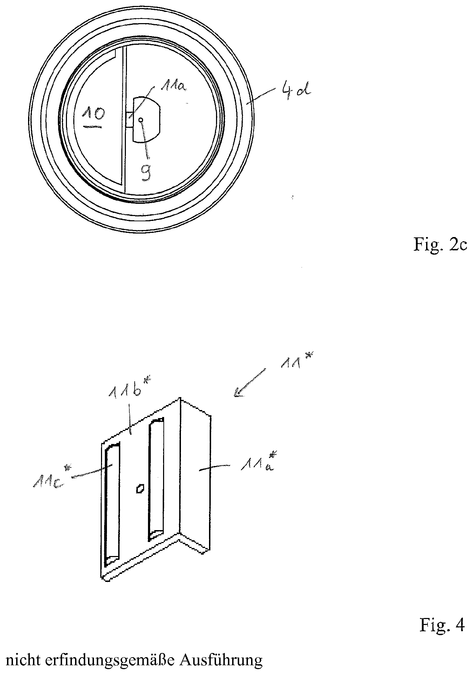

Wie erwähnt, ist vorliegend der elektroaktive Polymeraktuator 10 als planarer Aktuator ausgebildet, d.h., dass hier eine Stellbewegung im Wesentlichen in der Erstreckungsebene der elektroaktiven Polymerschicht erfolgt. Wie in der Draufsicht der Fig. 2c erkennbar, füllt der elektroaktive Polymeraktuator 10 innerhalb der kreisförmigen Grundfläche des scheibenförmigen Abschnitts des Schließmittels 4 ein Kreissegment aus. Wie in der Detailzeichnung der Fig. 2a dargestellt, ist der elektroaktive Polymeraktuator 10 mit einem Sperrelement 11 gekoppelt, welches durch ein Gleitlager mit einem Gleitlagerbolzen 11a und einer Gleitlagerhülse 11b gebildet ist, wobei der Gleitlagerbolzen 11a mittels des elektroaktiven Polymeraktuators 10 in die Gleitlagerhülse 11b einschiebbar ist. Wie ferner in Fig. 2a erkennbar, weisen der Gleitlagerbolzen 11a und die Gleitlagerhülse 11b in ihrer Mantelfläche jeweils eine Öffnung auf, so dass bei einem Einschieben des Gleitlagerbolzens 11a in die Gleitlagerhülse 11b die Durchgangsöffnungen zueinander und zur Entlastungsöffnung 9 fluchtend ausgerichtet sind und diese freigeben.

Wie in Fig. 1 gezeigt, trennt das Schließmittel 4 ein mit dem Ventilzufluss 2 verbundenen Druckraum 5 von einem Steuerraum 6. Dabei ist die erste Seite 4a des Schließmittels 4 dem Druckraum 5 zugewandt, während die zweite Seite 4b des Schließmittels 4 dem Steuerraum 6 zugewandt ist. Der Druckraum 5 ist mit dem Steuerraum 6 durch eine Steueröffnung 8, die vorliegend als in das Ventilgehäuse 1 eingeformter Kanal ausgebildet ist, verbunden.

Ebenso möglich ist es, die Steueröffnung, ebenso wie die Entlastungsöffnung 9, in das Schließmittel einzuformen. Schließlich umfasst das Ventilgehäuse noch ein Teilvolumen 13, in welchem beispielsweise eine Ansteuerelektronik für den elektroaktiven Polymeraktuator 10 untergebracht werden kann.

Die Betriebsweise des Ventils der Fig. 1 ist die folgende:
Auf der Ventilzuflussseite befindet sich unter Druck stehendes Fluid, beispielsweise Wasser. Dieses füllt sowohl den Ventilzufluss 2 als auch dem Druckraum 5 aus. Über die Steueröffnung 8 strömt das Fluid auch in den Steuerraum 6 und setzt diesen unter Druck, wodurch das Schließmittel 4 über seine druckbeaufschlagte zweite Seite 4b auf den Ventilsitz 7 gedrückt wird und diesen abgedichtet. Hierdurch ist die Schließstellung des Ventils definiert.

Zum Öffnen des Ventils wird über die nicht dargestellte Elektronik der elektroaktive Polymeraktuator 10 aktiviert, so dass dieser als planarer Aktuator eine Stellbewegung in der Ebene seiner gestapelten Polymerschichten ausführt. Hierdurch wird bei dem Sperrelement 11 des Schließmittels 4 der Gleitlagerbolzen 11a in die Gleitlagerhülse 11b eingeschoben, bis ihre Öffnungen mit der Entlastungsöffnung 9 fluchten und so eine Fluidverbindung zwischen dem Steuerraum 6 und dem Ventilabfluss 3 hergestellt ist. Hierdurch baut sich der Druck oberhalb des Schließmittels 4 ab, so dass das Schließmittel 4 angehoben wird, wodurch der Ventilsitz 7 freigegeben und das Ventil als Ganzes geöffnet wird. Dabei ist der Durchflussquerschnitt der Entlastungsöffnung 9 bevorzugt grösser als der Durchflussquerschnitt der Steueröffnung 8, so dass mit dem Abströmen des Fluids aus dem Druckraum nicht Fluid vom Ventilzufluss 2 in gleicher Menge in den Druckraum 6 einströmen und so das Anheben des Schließmittels 4 verhindern kann.

Die unterschiedlichen Stellpositionen des elektroaktiven Polymeraktuators 10 und damit des daran gekoppelten Sperrelements 11 sind in den Fig. 2a und 2b im Detail dargestellt.

Fig. 3a und 3b zeigen ein Schließmittel 4*, welches ein gegenüber dem Schließmittel 4 modifiziertes Sperrelement 11* umfasst. Dieses weist, wie insbesondere in Fig. 4 erkennbar, eine gewinkelte Form auf und ist mit einem an dem elektroaktiven Polymeraktuator 10 anliegenden ersten kürzeren Abschnitt 11a* und einem dazu rechtwinklig angeordneten zweiten längeren Abschnitt 11b* ausgebildet. Der längere Abschnitt 11b* fungiert als Wälzlagerkäfig und umfasst zwei Walzen 11c*, welche reibungsarm auf einer entsprechenden Lauffläche des Gehäuses des Schließmittels 4* abrollen. Wiederum bewirkt der elektroaktive Polymeraktuator 10, dass das Sperrelement 11* in dem Schließmittel 4* derart verlagert wird, dass eine in seinem zweiten längeren Abschnitt 11b* vorliegend zwischen den Walzen 11c* eingeformte Öffnung (s. Fig. 3b und 4) fluchtend zur Entlastungsöffnung 9 ausgerichtet wird, so dass zwecks Öffnung des Ventils eine fluidleitende Verbindung zwischen dem Steuerraum 5 und dem Ventilabfluss 3 hergestellt wird. Es versteht sich, dass das Schließmittel auch derart gestaltet sein kann, dass die Fluidverbindung im inaktiven Zustand des elektroaktiven Polymeraktuators 10 hergestellt ist. Dies erfordert, wie in Fig. 3a,b erkennbar, lediglich eine relative Verlagerung der Öffnung im längere Abschnitt 11b* des Sperrelements 11*.

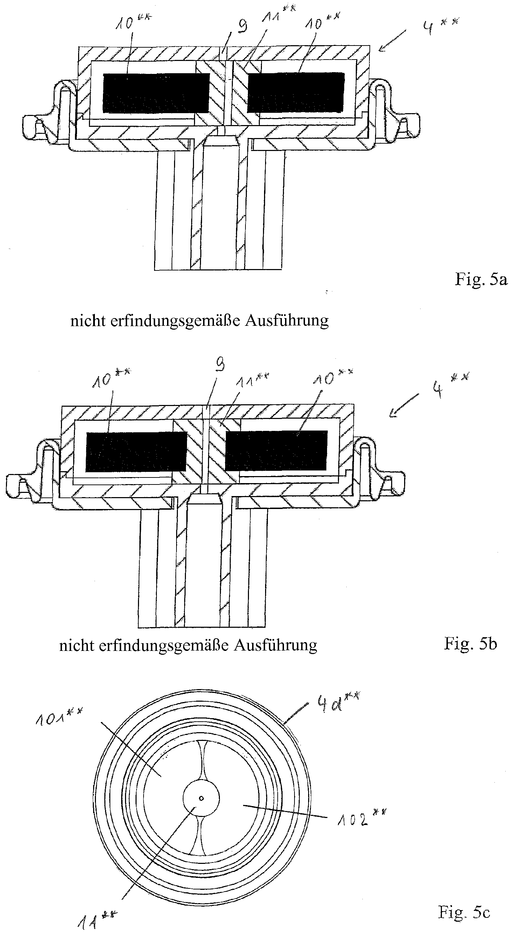

Die Fig. 5a - 5c zeigen schließlich eine dritte Variante des Schließmittels. Dieses umfasst einen hinsichtlich seiner Form abgewandelten elektroaktiven Polymerstapelaktuator 10**, welcher in dem Schließmittel 4** ringförmig einen axial geöffneten Zylinder mit an den Stirnenden radial verbreiterten Kragen als Sperrelement 11** umgibt. Auf der Unterseite einer jeden Polymerschicht des Schichtstapels des elektroaktiven Polymeraktuator 10** ist die Elektrode vollflächig ausgebildet (nicht sichtbar), während sie an der jeweiligen Oberseite strukturiert ist (vgl. Fig. 5c). Es versteht sich, dass auch die unterseitige Elektrode strukturiert sein kann, während die oberseitige Elektrode vollflächig, d.h. ringförmig entsprechend der Form der jeweiligen elektroaktiven Polymerschicht ausgebildet ist. Ebenso können auch beide Elektroden strukturiert sein. Vorliegend ist die oberseitige Elektrode in zwei Elektrodenabschnitte 101**, 102** geteilt, wobei die zwei Elektrodenabschnitte 101**, 102** den axial geöffneten Zylinder 11** halbkreisförmig umgeben.

Zur Erzeugung einer Stellbewegung in der Ebene der Polymerschichten wird nun lediglich die untere Elektrode sowie einer der beiden Elektrodenabschnitte 101**, 102** angesteuert, so dass die elektroaktive Polymerschicht nur lokal, nämlich in dem Flächenabschnitt zwischen der unteren Elektrode und dem angesteuerten oberen Elektrodenabschnitt, aktiviert wird. Dies hat zur Folge, dass der Schichtstapel des elektroaktiven Polymeraktuators 10** nur an dieser Stelle verformt, d.h. senkrecht zur Flächenerstreckung komprimiert gleichzeitig lateral gedehnt wird, wie oben erläutert. Hierdurch wird eine laterale Bewegung des zylinderförmigen Sperrelement 11** bewirkt, wobei der der nichtaktivierte Abschnitt des Polymerschichtstapels lateral gestaucht wird.

Fig. 5a zeigt dabei, dass die ringförmigen elektroaktiven Polymerschichten des elektroaktiven Polymeraktuators 10** links von dem Sperrelement 11** lateral gedehnt werden, so dass das Sperrelement 11** aus der Öffnungsposition der Entlastungsöffnung 9 herausbewegt und das Ventil entsprechend geschlossen wird. In Fig. 5b sind die ringförmigen elektroaktiven Polymerschichten des elektroaktiven Polymeraktuators 10** vollständig nicht aktiviert, so dass das Sperrelement 11** in der Ruheposition verharrt, die vorliegend die Öffnungsstellung des Ventils darstellt. Bei entsprechender Umgestaltung der Anordnung des Sperrelements 11** relativ zur Entlastungsöffnung 9 ist es selbstverständlich auch möglich, die Schließstellung des Ventils als Grundstellung zu definieren.

## Patentansprüche

1. Eigenmediumbetätigtes Ventil für ein Fluid umfassend
- ein Ventilgehäuse (1) mit einem Ventilzufluss (2) und einem Ventilabfluss (3),
- einen in Strömungsrichtung des Fluids zwischen Ventilzufluss (2) und Ventilabfluss (3) angeordneten Ventilsitz (7),
- ein in dem Ventilgehäuse (1) beweglich angeordnetes Schließmittel (4) mit einer ersten Seite (4a) und einer zweiten Seite (4b), wobei das Schließmittel (4) im Schließzustand des Ventils den Ventilsitz (7) dicht verschließt,
- eine Entlastungsöffnung (9) zur Herstellung eines Druckausgleichs zwischen der ersten Seite (4a) und der zweiten Seite (4b) des Schließmittels (4) und
- wenigstens einen Steueraktuator, wobei der Steueraktuator in einer Schließstellung die Entlastungsöffnung (9) des Schließmittel (4) verschließt und in einer Öffnungsstellung die Entlastungsöffnung (9) des Schließmittel (4) freigibt, derart, dass das Schließmittel (4) infolge eines Druckausgleichs über die Entlastungsöffnung (9) den Ventilsitz (7) freigibt,
**dadurch gekennzeichnet, dass**
der wenigstens eine Steueraktuator als wenigstens ein elektroaktiver Polymeraktuator (10, 10**) ausgebildet ist, wobei die Entlastungsöffnung (9) durch ein mittels des wenigstens einen elektroaktiven Polymeraktuators betätigbares Sperrelement (11, 11*, 11**) verschließbar ist und wobei das Sperrelement (11) durch ein Gleitlager mit einem Gleitlagerbolzen (11a) und einer Gleitlagerhülse (11b) gebildet ist, wobei der Gleitlagerbolzen (11a) mittels des wenigstens einen elektroaktiven Polymeraktuators (10) in die Gleitlagerhülse (11b) einschiebbar ist und wobei der Gleitlagerbolzen (11a) und die Gleitlagerhülse (11b) in ihrer Mantelfläche jeweils eine Durchgangsöffnung aufweisen, derart, dass bei einem Einschieben des Gleitlagerbolzens (11a) in die Gleitlagerhülse (11b) die Durchgangsöffnungen zueinander und zur Entlastungsöffnung (9) fluchtend ausgerichtet sind und diese freigeben.

2. Ventil nach Anspruch 1,
**dadurch gekennzeichnet, dass**
in dem Ventilgehäuse (1) auf der ersten Seite (4a) des Schließmittels (4) ein Druckraum (5) vorgesehen ist und auf der zweiten Seite (4b) des Schließmittels (4) ein Steuerraum (6) vorgesehen ist, wobei der Druckraum (5) mit dem Ventilzufluss (2) verbunden ist und über den Ventilsitz (7) mit dem Ventilabfluss (3) verbunden ist, wobei der Steuerraum (6) über eine Steueröffnung (8) mit dem Ventilzufluss (2) verbunden ist und über die Entlastungsöffnung (9) mit dem Ventilabfluss (3) verbunden ist und wobei der Strömungsquerschnitt der Steueröffnung (8) geringer ist als der Strömungsquerschnitt der Entlastungsöffnung (9).

3. Ventil nach Anspruch 1 oder 2,
**dadurch gekennzeichnet, dass**
der wenigstens eine elektroaktive Polymeraktuator (10, 10**) wenigstens eine elektrodierte elektroaktive Polymerschicht umfasst.

4. Ventil nach Anspruch 3,
**dadurch gekennzeichnet, dass**
die wenigstens eine elektrodierte elektroaktive Polymerschicht eine dielektrische Elastomerschicht ist, wobei die dielektrische Elastomerschicht insbesondere ein Polyurethan-Elastomer, ein Silikon-Elastomer und/oder ein Acrylat-Elastomer enthält.

5. Ventil nach Anspruch 3 oder 4,
**dadurch gekennzeichnet, dass**
der wenigstens eine elektroaktive Polymeraktuator (10, 10**) als Stapelaktuator mit einer Mehrzahl übereinander gestapelter elektroaktiver Polymerschichten ausgebildet ist.

6. Ventil nach einem der Ansprüche 3 bis 5,
**dadurch gekennzeichnet, dass**
der wenigstens eine elektroaktive Polymeraktuator (10, 10**) als planarer Aktuator ausgebildet ist, bei dem die Stellbewegung im Wesentlichen in der Erstreckungsebene der elektroaktiven Polymerschicht erfolgt.

7. Ventil nach Anspruch 6,
**dadurch gekennzeichnet, dass**
der planare Aktuator eine strukturierte Elektrodenanordnung (101**, 102**) aufweist, derart, dass die elektroaktive Polymerschicht lokal aktivierbar ist, um die Stellbewegung zu bewirken.

8. Ventil nach einem der Ansprüche 1 bis 7,
**dadurch gekennzeichnet, dass**
die Entlastungsöffnung (9) und der wenigstens eine elektroaktive Polymeraktuator (10, 10**) in das Schließmittel (4) integriert sind.

9. Ventil nach einem der Ansprüche 2 bis 7,
**dadurch gekennzeichnet, dass**
die Steueröffnung (8) in das Ventilgehäuse (1) eingeformt ist.

## Claims

1. Valve for a fluid, operated by its own medium, comprising
- a valve housing (1) with a valve inlet (2) and a valve outlet (3),
- a valve seat (7) arranged in the direction of flow of the fluid between the valve inlet (2) and the valve outlet (3),
- a closure means (4) arranged movably in the valve housing (1), with a first side (4a) and a second side (4b), wherein the closure means (4) closes the valve seat (7) tightly when the valve is in the closed state,
- a balancing opening (9) for providing a pressure compensation between the first side (4a) and the second side (4b) of the closure means (4) and
- at least one control actuator, wherein the control actuator closes the balancing opening (9) of the closure means (4) in a closed position and frees the balancing opening (9) of the closure means (4) in an open position such that the closure means (4) frees the valve seat (7) as a result of a pressure compensation via the balancing opening (9) the valve seat,
**characterised in that**
the at least one control actuator is designed in the form of at least one electroactive polymer actuator (10, 10**), wherein the balancing opening (9) can be closed off by a blocking element (11, 11*, 11**) which can be actuated by means of the at least one electroactive polymer actuator and wherein the blocking element (11) is formed by a slide bearing with a slide bearing pin (11a) and a slide bearing sleeve (11b), wherein the slide bearing pin (11a) can be pushed into the slide bearing sleeve (11b) by means of the at least one electroactive polymer actuator (10) and wherein the slide bearing pin (11a) and the slide bearing sleeve (11b) each have a through-opening in their lateral surface such that when the sliding bearing pin (11a) is pushed into the slide bearing sleeve (11b) the through-openings are aligned with one another and with the balancing opening (9) and free the latter.

2. Valve according to Claim 1,
**characterised in that**
in the valve housing (1), a pressure chamber (5) is provided on the first side (4a) of the closure means (4) and a control chamber (6) is provided on the second side (4b) of the closure means (4), wherein the pressure chamber (5) is connected with the valve inlet (2) and is connected with the valve outlet (3) via the valve seat (7), wherein the control chamber (6) is connected with the valve inlet (2) via a control opening (8) and is connected with the valve outlet (3) via the balancing opening (9) and wherein the flow cross section of the control opening (8) is smaller than the flow cross section of the balancing opening (9).

3. Valve according to Claim 1 or 2,
**characterised in that**
the at least one electroactive polymer actuator (10, 10**) comprises at least one electrodised electroactive polymer layer.

4. Valve according to Claim 3,
**characterised in that**
the at least one electrodised electroactive polymer layer is a dielectric elastomer layer, wherein the dielectric elastomer layer contains in particular a polyurethane elastomer, a silicon elastomer and/or an acrylate elastomer.

5. Valve according to Claim 3 or 4,
**characterised in that**
the at least one electroactive polymer actuator (10, 10**) is designed in the form of a stack actuator with a plurality of electroactive polymer layers stacked on top of one another.

6. Valve according to any one of Claims 3 to 5,
**characterised in that**
the at least one electroactive polymer actuator (10, 10**) is designed in the form of a planar actuator, in which the actuating movement substantially takes place in the extension plane of the electroactive polymer layer.

7. Valve according to Claim 6,
**characterised in that**
the planar actuator has a structured electrode arrangement (101**, 102**), such that the electroactive polymer layer is locally activatable in order to effect the actuating movement.

8. Valve according to any one of claims 1 to 7,
**characterised in that**
the balancing opening (9) and the at least one electroactive polymer actuator (10, 10**) are integrated in the closure means (4).

9. Valve according to any one of claims 2 to 7,
**characterised in that**
the control opening (8) is formed in the valve housing (1).

## Revendications

1. Soupape pour un fluide, actionnée par son propre fluide, comportant
- un carter de soupape (1) avec une alimentation de soupape (2) et un écoulement de soupape (3),
- un siège de soupape (7) agencé en direction d'écoulement du fluide entre l'alimentation de soupape (2) et l'écoulement de soupape (3),
- un moyen de fermeture (4) agencé mobile dans le carter de soupape (1) avec un premier côté (4a) et un deuxième côté (4b), auquel cas le moyen de fermeture (4) ferme de façon étanche, dans l'état de fermeture de la soupape, le siège de soupape (7),
- une ouverture de décharge (9) permettant de générer un équilibrage de pression entre le premier côté (4a) et le deuxième côté (4b) du moyen de fermeture (4) et
- au moins un actionneur de commande, auquel cas l'actionneur de commande ferme,
dans un état de fermeture, l'ouverture de décharge (9) du moyen de fermeture (4) et libère, dans un état d'ouverture, l'ouverture de décharge (9) du moyen de fermeture (4) de telle sorte que le moyen de fermeture (4), suite à un équilibrage de pression, libère le siège de soupape (7) par l'intermédiaire de l'ouverture de décharge (9),
**caractérisée en ce que**
le au moins un actionneur de commande est conçu en tant qu'au moins un actionneur polymère électro-actif (10, 10**), auquel cas l'ouverture de décharge (9) est susceptible d'être fermée par un élément de blocage (11, 11*, 11**) actionnable par l'intermédiaire d'au moins un actionneur polymère électro-actif et auquel cas l'élément de blocage (11) est formé par un palier coulissant avec un boulon de palier coulissant (11a) et une douille de palier coulissant (11b), auquel cas le boulon de palier coulissant (11a) est susceptible d'être inséré par l'intermédiaire d'au moins un actionneur polymère électro-actif (10) dans la douille de palier coulissant (11b) et auquel cas le boulon de palier coulissant (11a) et la douille de palier coulissant (11b) présentent dans leur surface enveloppe respectivement une ouverture traversante, de telle sorte que lors d'une insertion du boulon de palier coulissant (11a) dans la douille de palier coulissant (11b) les ouvertures traversantes sont alignées à fleur entre elles et vis-à-vis de l'ouverture de décharge (9) et libèrent cette dernière.

2. Soupape selon la revendication 1,
**caractérisée en ce que**
l'on prévoit une chambre de refoulement (5) dans le carter de soupape (1) sur le premier côté (4a) du moyen de fermeture (4) et une salle de commande (6) sur le deuxième côté (4b) du moyen de fermeture (4), auquel cas la chambre de refoulement (5) est reliée avec l'alimentation de soupape (2) et est reliée par l'intermédiaire du siège de soupape (7) avec l'écoulement de soupape (3), auquel cas la chambre de commande (6) est reliée par l'intermédiaire d'une ouverture de commande (8) avec l'alimentation de soupape (2) et est reliée par l'intermédiaire de l'ouverture de décharge (9) avec l'écoulement de soupape (3) et auquel cas la section transversale d'écoulement de l'ouverture de commande (8) est inférieure à la section transversale d'écoulement de l'ouverture de décharge (9).

3. Soupape selon la revendication 1 ou 2,
**caractérisée en ce que**
le au moins un actionneur polymère électro-actif (10, 10**) comprend au moins une couche polymère électro-active à base d'électrodes.

4. Soupape selon la revendication 3,
**caractérisée en ce que**
la au moins une couche polymère électro-active à base d'électrodes est une couche d'élastomère diélectrique, auquel cas la couche d'élastomère diélectrique contient notamment un élastomère polyuréthane, un élastomère à base de silicone et/ou un élastomère à base d'acrylate.

5. Soupape selon la revendication 3 ou 4,
**caractérisée en ce que**
le au moins un actionneur polymère électro-actif (10, 10**) est conçu en tant qu'actionneur à empilement avec une multitude de couches polymères électro-actives superposées.

6. Soupape selon une des revendications de 3 à 5,
**caractérisée en ce que**
le au moins un actionneur polymère électro-actif (10, 10**) est conçu en tant que actionneur planaire, dans le cas duquel le mouvement de réglage a lieu essentiellement dans le plan d'extension de la couche polymère électro-active.

7. Soupape selon la revendication 6,
**caractérisée en ce que**
l'actionneur planaire présente un agencement structuré d'électrodes (101**, 102**), de telle sorte que la couche polymère électro-active est susceptible d'être activée localement afin d'entraîner le mouvement de réglage.

8. Soupape selon une des revendications de 1 à 7,
**caractérisée en ce que**
une ouverture de décharge (9) et au moins un actionneur polymère électro-actif (10, 10**) sont intégrés dans le moyen de fermeture (4).

9. Soupape selon une des revendications de 2 à 7,
**caractérisée en ce que**
l'orifice de commande (8) est moulé dans le carter de soupape (1).
